# EUROPÄISCHE PATENTSCHRIFT

(11) **EP 0 831 964 B1**
(45) Veröffentlichungstag und Bekanntmachung des Hinweises auf die Patenterteilung: **17.03.2004**
(21) Anmeldenummer: 96918657.6
(22) Anmeldetag: 01.06.1996
(51) Int. Cl.: B01D 69/00, G01M 3/20

(54) **VERFAHREN ZUR HERSTELLUNG EINES GASDURCHLASSES MIT SELEKTIV WIRKENDER DURCHTRITTSFLÄCHE SOWIE NACH DIESEM VERFAHREN HERGESTELLTER GASDURCHLASS**
PROCESS FOR PRODUCING A GAS PASSAGE WITH SELECTIVELY ACTING PENETRATION SURFACE AND GAS PASSAGE PRODUCED BY SAID PROCESS
PROCEDE POUR LA FABRICATION D'UN PASSAGE DE GAZ AVEC MEMBRANE PERMEABLE A ACTION SELECTIVE AINSI QU'UN PASSAGE DE GAZ FABRIQUE PAR CE PROCEDE

(30) Priorität: 10.06.1995 DE 19521275
(43) Veröffentlichungstag der Anmeldung: 01.04.1998
(73) Patentinhaber: Leybold Vakuum GmbH, 50968 Köln (DE)
(72) Erfinder: GROSSE BLEY, Werner, D-53125 Bonn (DE); BÖHM, Thomas, D-50859 Köln (DE); DÖBLER, Ulrich, D-42929 Wermelskirchen (DE); LACHER, Manfred, D-55116 Mainz (DE); ZETTERER, Thomas, D-55270 Engelstadt (DE)
(74) Vertreter: Leineweber, Jürgen, Dipl.-Phys.
(86) Internationale Anmeldenummer: PCT/EP1996/002378
(87) Internationale Veröffentlichungsnummer: WO 1996/041677

(56) Entgegenhaltungen:
- EP-A- 0 264 594
- WO-A-89/08489
- WO-A-95/13860
- US-A- 3 828 527
- US-A- 3 939 695

## Beschreibung

Die Erfindung bezieht sich auf ein Verfahren zur Herstellung eines Gasdurchlasses mit den Merkmalen des Oberbegriffs der Patentansprüche 1 und 6. Gasdurchlässe dieser Art werden beispielsweise bei Meß- oder Analysegeräten eingesetzt. Es soll erreicht werden, dass leichte Gase bevorzugt, schwerere Gase weniger bevorzugt z.B. in ein Meßgerät eintreten.

Gasdurchlässe der hier betroffenen Art sind aus der DE-A-43 26 265 bekannt. Als Stützscheibe für die Membran dient eine Sintermetallscheibe. Sie bildet - zusätzlich zur Membran - einen Strömungswiderstand und hat damit einen die Durchströmungsverhältnisse des Gasdurchlasses beeinträchtigenden Einfluss. Dieses gilt auch für den aus der DE-A-16 48 367 bekannten Gasdurchlass, bei dem sich eine aus einem gasselektiven Siliziumwerkstoff bestehende Membran auf einem porösen Träger abstützt.

Meß- und Analysengeräte sollen generell eine hohe Empfindlichkeit und eine kurze Ansprechzeit haben. Bei einem Testgasdetektor nach der DE-A-43 26 265 soll deshalb erreicht werden, daß möglichst viel Helium in möglichst kurzer Zeit durch die Durchtrittsfläche hindurchtritt. Dieses ist nur möglich, wenn die Durchtrittsfläche zum einen möglichst groß und zum anderen möglichst dünn ausgebildet ist. Dem steht jedoch entgegen, daß die Durchtrittsfläche in aller Regel mit einem Differenzdruck beaufschlagt ist. Der Innenraum des Meßgerätes ist evakuiert; außen herrscht Atmosphärendruck. Der Größe und der Dicke der Durchtrittsfläche sind wegen dieser Differenzdruckbelastung Grenzen gesetzt.

Aus der Schrift zum US-Patent 3 828 527 ist ein Gasdurchlass mit selektiv wirkender Durchtrittsfläche bekannt. Als Durchtrittsfläche dient eine nicht beheizbare Membran aus Polytetrafluoräthylen, welche sich auf einer perforierten Scheibe abstützt. Die internationale Anmeldung W095/13860 offenbart schließlich Verfahren zur Herstellung von Membranen mit Stützstrukturen unter Anwendung von Methoden, wie sie aus der Dünnschichttechnologie bekannt sind.

Der Erfindung liegt die Aufgabe zugrunde, einen Gasdurchlass der hier betroffenen Art zu schaffen, der eine relativ große und relativ dünne Gasdurchtrittsfläche hat, der mit relativ großen Druckdifferenzen (Atmosphäre zu Hochvakuum) beaufschlagbar ist und der die Herstellung von Membran und Stützscheibe mit vertretbaren Kosten erlaubt.

Erfindungsgemäß wird diese Aufgabe dadurch gelöst, daß der Gasdurchlass entsprechend den kennzeichnenden Merkmalen der Verfahrensansprüche hergestellt wird. Ein in dieser Weise hergestellter Gasdurchlass besitzt eine Vielzahl kleiner Fenster, deren Fensterflächen durch die Stützstruktur nicht beeinträchtigt sind. Je kleiner die Fensterflächen sind, desto dünner kann die die Fensterflächen bildende Membran sein, ohne ihre Stabilität bei den auftretenden Differenzdrücken zu verlieren. Wenn beispielsweise 200 quadratische Fenster aus Quarzglas mit einer Kantenlänge von 0,7 mm vorgesehen sind, dann bilden diese eine Gesamtdurchtrittsfläche von 0,98 cm². Eine Durchtrittsfläche dieser Art ist bereits dann mit einem Differenzdruck von einer Atmosphäre belastbar, wenn die Dicke der einzelnen Fensterflächen etwa 5 bis 10 µm beträgt. Dadurch, daß jedes der Fenster eine unter Anwendung eines dünnschicht-technischen Verfahrens hergestellte Heizwendel ausweist, ist die Beheizung des Gasdurchlasses auf die einzelnen Fensterflächen selbst beschränkt. Die Gefahr, daß in der Umgebung befindliche Klebestellen verstärkt entgasen oder undicht werden, besteht nicht.

Vorzugsweise bestehen die die Durchtrittsfläche bildenden Fenster aus Quarz, Quarzglas oder ähnlichen Materialien (z.B. Pyrex-Glas), da diese mit Hilfe von Verfahren, wie sie aus der Dünnschichttechnologie bekannt sind, mit vertretbaren Kosten hergestellt werden können.

Weitere Vorteile und Einzelheiten der Erfindung sollen anhand von in den Figuren 1 bis 4 schematisch dargestellten Ausführungsbeispielen erläutert werden. Es zeigen
- Figur 1 ein Druckmeßgerät mit einem Gasdurchlaß nach der Erfindung,
- Figur 2 eine Draufsicht auf den Durchlaß mit einer aus 16 Fenstern bestehenden Durchtrittfläche sowie
- Figuren 3 und 4 sind Skizzen zur Erläuterung der Herstellung von Durchtrittsflächen nach Verfahren, wie sie aus der Dünnschichttechnologie bekannt sind.

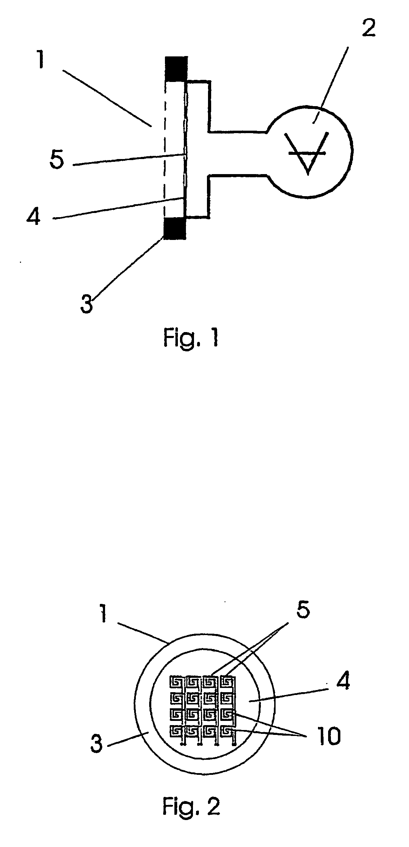

In den Figuren 1 und 2 ist der erfindungsgemäße Durchlaß generell mit 1 bezeichnet. Es ist der Durchlaß zu einem nur als Symbol dargestellten Vakuummeßgerät 2.

Der Durchlaß 1 umfaßt den Flansch 3, der der Halterung einer Scheibe 4 dient. Die Scheibe 4 ist mit einer Mehrzahl von Fenstern 5 ausgerüstet, welche die Gasdurchtrittsflächen bilden. Da die Fenster 5 relativ klein sind, können die fensterbildenden Schichten, Membranen o. dergl. sehr dünn sein, um mit einem bestimmten Differenzdruck beaufschlagt zu werden. Die Erfindung ermöglicht es, Gasdurchlässe mit relativ großen und dennoch relativ dünnen Gasdurchtrittsflächen auszurüsten.

Zweckmäßig wird als Material für die Durchtrittsflächen bzw. Fenster Quarz oder Quarzglas eingesetzt, da zur Bearbeitung dieses Materials eine Vielzahl von Verfahren aus der Halbleitertechnik bekannt sind.

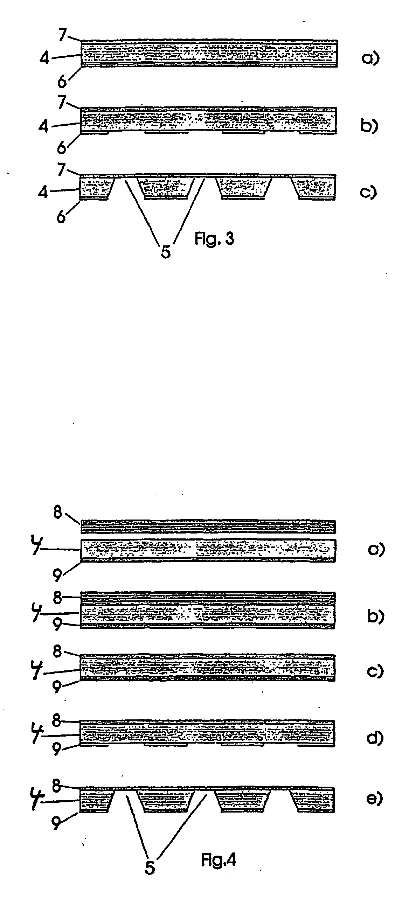

Anhand der Figur 3 wird eine Methode der Herstellung von aus Quarzglas bestehenden Durchtrittsflächen erläutert. Hierbei wird von einem Siliziumwafer 4 ausgegangen. Dieser wird durch einen Oxidationsprozeß mit SiO₂ beschichtet (Schichten 6,7 in Fig. 3a). In der Regel geschieht dies in einem Gemisch aus Wasserdampf und Sauerstoff bei Temperaturen um 1100°C und führt in Abhängigkeit von den Prozeßparametern zu Oxidschichtdicken von ca. 5µm. Nach dem Oxidationsprozeß wird die Vorder- und Rückseite der Si-Wafer gegen die nächsten Prozeßschritte passiviert, z.B. mit einer 300nm dicken PECVD-SiC-Schicht. Anschließend wird auf der Rückseite des Si-Wafers die Fenstergeometrie und -anordnung über einen Phötolithographieprozeß definiert. Dies führt zu Öffnungen im Photolack und zu der Möglichkeit, an diesen Stellen die Passivierung und die SiO2-Schicht über einen Ätzprozeß, z.B. reaktives Ionenätzen, zu entfernen (Fig. 3b). Anschließend können in einem weiteren Ätzprozeß, z. B. naßchemisches Ätzen von Si in KOH, die Fenster freigeätzt werden (Fig. 3c).

Anstelle der Oxidation zur Herstellung von SiO2-Schichten können auch andere Beschichtungsprozesse, wie z.B. plasmaunterstützte CVD oder Niederdruck-CVD-Prozesse zur Herstellung von dünnen Schichten aus Materialien dienen, die die gewünschten Selektivitätseigenschaften besitzen. Ein weiteres Verfahren zur Herstellung gasselektiver Membranen ist in Fig. 4 beschrieben. Hierbei wird ein Substrat 4, z. B. ein Siliziumwafer, mit einem anderen Substrat 8 aus einem gasselektiven Material, z.B. Pyrex-Glas, vakuumdicht verbunden, z.B. durch anodisches Bonden (Fig. 4a,b). Die Rückseite des Substrats 4 wird mit einer entsprechenden Passivierung 9 versehen, die später photolithographisch strukturiert werden kann. In einem mechanischen oder chemischen Bearbeitungs-schritt (Schleifen, Polieren, Abätzen, etc.) wird das gasselektive Material bis auf eine bestimmte Membrandicke abgedünnt (Fig. 4c). Über einen Photolithographie- und Ätzprozeß werden Fensteröffnungen auf der Rückseite des Substrats 7 definiert(Fig. 4d), die dann in einem weiteren Ätzprozeß freigeätzt werden (Fig. 4e).

Die aus Quarz, Quarzglas, Pyrexglas o. ä. bestehenden Fensterflächen 5 werden zweckmäßig jeweils mit einer Heizwendel ausgerüstet. Dieses kann durch dünnschichttechnische Verfahren geschehen. Leitendes Material wird über ein Vakuumbeschichtungverfahren aufgebracht und in Kombination mit einem Photolithographieprozeß mäanderförmig strukturiert, z.B. über einen Lift-off- oder einen Ätzprozeß. In Figur 2 sind Heizwendeln dieser Art angedeutet und mit 10 bezeichnet. Die Heizwendeln werden elektrisch kontaktiert (gebondet), damit sie in einem Stromkreis einschaltbar sind. Durch diese Art der Beheizung kann jede der Membranen punktuell auf hohe Temperaturen (ca. 500° C) gebracht werden, ohne das gesamte Substrat 4 zu erhitzen. Dadurch wird vermieden, daß sich evtl. vorhandene Klebeverbindungen, durch die die Scheibe 4 mit dem Flansch 3 verbunden ist, aufheizen und entgasen oder undicht werden. Außerdem wird der Stromverbrauch reduziert und damit ein Aufheizen des gesamten Nachweissystems vermieden.

Der Einsatz des erfindungsgemäßen Gasdurchlasses ist besonders zweckmäßig bei Testgasdetektoren für Lecksucher, die mit leichten Gasen, vorzugsweise mit Helium als Testgas arbeiten (siehe DE 43 26 265). Auch bei Analysengeräte für leichte Gase (H2, HD, D2, 3He, He usw.) ist der Einsatz des beschriebenen Gasdurchlasses zur Erhöhung des Gasdurchsatzes und zur Verbesserung der Ansprechzeit vorteilhaft.

## Patentansprüche

1. Verfahren zur Herstellung eines Gasdurchlasses (1) mit einer selektiv wirkenden Durchtrittsfläche für Analysengeräte, vorzugsweise für Testgasdetektoren von Lecksuchern, mit einer gasselektiven, die Durchtrittsfläche bildenden Membran (7,8),
- die für Helium und Wasserstoff sowie deren Isotope im wesentlichen durchlässig, für schwerere Gase im wesentlichen undurchlässig ist,
- die aus einem Siliziumwerkstoff, wie Quarz, Quarzglas, Pyrex-Glas, Siliziumoxid, Siliziumnitrid, Siliziumoxinitrid, Siliziumcarbid, besteht,
- die sich auf einer mit einer Vielzahl von Öffnungen versehenen Scheibe (4) abstützt und
- die mit Heizmitteln (10) ausgerüstet ist,
**dadurch gekennzeichnet,**
- **dass** auf die eine Seite einer Siliziumscheibe (4) die die gewünschten Selektivitätseigenschaften besitzende Schicht (7, 8) aus dem Siliziumwerkstoff aufgebracht wird,
- **dass** auf der anderen Seite der Siliziumscheibe (4) die Geometrie einer Vielzahl von Fensteröffnungen (5) definiert wird,
- **dass** diese andere Seite der Siliziumscheibe (4) derart durch Ätzen behandelt wird, dass nur in der Siliziumscheibe (4) eine Vielzahl von Öffnungen entsteht, die gemeinsam mit der Schicht (7, 8) aus dem gasselektiven Silizium-Werkstoff die gewünschte Vielzahl der Fensteröffnungen (5) bildet, und
- **dass** jedes der Fenster (5) mit einer Heizwendel (10) versehen wird, die durch ein dünnschichttechnisches Verfahren, insbesondere durch ein Vakuumbeschichtungsverfahren oder durch Photolithographie, aufgebracht wird.

2. Verfahren nach Anspruch 1, **dadurch gekennzeichnet, daß** die Definition der Fensteröffnungen (5) in der Weise erfolgt, dass die Siliziumscheibe (4) auf ihrer der Membran (7, 8) aus dem gasselektiven Siliziumwerkstoff gegenüberliegenden Seite mit einer Passivierungs- und einer Fotolackschicht (6) versehen wird, dass die Fotolackschicht (6) über eine Maske belichtet wird, die die Form der Fensteröffnungen (5) hat, dass die belichteten Fotolackbereiche entfernt werden und dass in den von Fotolack freien Bereichen zuerst die Passivierung und dann das Silizium entfernt werden, so dass nur noch die aus dem gasselektiven Siliziumwerkstoff bestehende Schicht (7, 8) stehen bleibt und die gewünschte aus vielen Fenstern (5) bestehende Durchtrittsfläche bildet.

3. Verfahren nach Anspruch 1, **dadurch gekennzeichnet, dass** die Siliziumscheibe (4) mit einer Schicht (8) aus dem gasselektiven Siliziumwerkstoff vakuumdicht verbunden wird, dieses Material durch einen mechanischen oder chemischen Bearbeitungsschritt abgedünnt wird und von der Rückseite her die Fensteröffnungen (5) über dünnschichttechnische Verfahren definiert und geätzt werden.

4. Verfahren nach Anspruch 3, **dadurch gekennzeichnet, dass** die fensterbildende Schicht (8) über eine vakuumdichte Verbindung mit der Siliziumscheibe (4) anodisch gebondet wird und anschließend die mechanische oder chemische Bearbeitung zur Herstellung der Membran (8) erfolgt.

5. Verfahren nach einem der Ansprüche 1 bis 4, **dadurch gekennzeichnet, dass** die Herstellung der Durchtrittsöffnungen in der Siliziumscheibe (4) durch einen Ätzprozess, insbesondere durch anisotropes Ätzen von Silizium in KOH, stattfindet.

6. Gasdurchlass (1) mit einer selektiv wirkenden Durchtrittsfläche für Analysengeräte, vorzugsweise für Testgasdetektoren von Lecksuchern, mit einer gasselektiven, die Durchtrittsfläche bildenden Membran (7,8),
- die für Helium und Wasserstoff sowie deren Isotope im wesentlichen durchlässig, für schwerere Gase im wesentlichen undurchlässig ist,
- die aus einem Siliziumwerkstoff, wie Quarz, Quarzglas, Pyrex-Glas, Siliziumoxid, Siliziumnitrid, Siliziumoxinitrid, Siliziumcarbid, besteht
- die sich auf einer mit einer Vielzahl von Öffnungen versehenen Scheibe (4) abstützt und
- die mit Heizmitteln (10) ausgerüstet ist,
**dadurch gekennzeichnet,**
- **dass** die Stützscheibe (4) als eine Siliziumscheibe (4) mit einer Vielzahl von Öffnungen ausgebildet ist,
- **dass** jede der Öffnungen in der Siliziumscheibe gemeinsam mit der gasselektiven Membran (7, 8) Fensteröffnungen (5) bildet und
- **dass** jedes der Fenster (5) mit einer Heizwendel (10) ausgerüstet ist, die durch ein dünnschichttechnisches Verfahren, insbesondere durch ein Vakuumbeschichtungsverfahren oder durch Phötolithographie, aufgebracht ist.

7. Gasdurchlass nach Anspruch 6, **dadurch gekennzeichnet, dass** ein Array von Fenstern zur Bildung der Gesamtdurchtrittsfläche, z.B. 200 quadratische Fenster (5) mit einer Kantenlänge von 0,7 mm zur Bildung einer Durchtrittsfläche von etwa 1 cm², vorgesehen ist.

8. Gasdurchlass nach Anspruch 6 oder 7, **dadurch gekennzeichnet, dass** die fensterbildenden Membranen (7, 8) aus einem Beschichtungs- oder Aufwachsprozess resultieren.

9. Gasdurchlass nach Anspruch 8, **dadurch gekennzeichnet, dass** das aus einem Beschichtungs- oder Aufwachsprozess resultierende Material aus Siliziumoxid, Siliziumnitrid, Siliziumoxinitrid, Siliziumcarbid, Pyrex-Glas oder einem anderen Hartglas besteht.

10. Verwendung eines Gasdurchlasses (1) mit den Merkmalen eines der Patentansprüche 6 bis 9 bei einem Testgasdetektor mit einem leichten Gas, vorzugsweise Helium, als Testgas.

11. Verwendung eines Gasdurchlasses (1) mit den Merkmalen eines der Patentansprüche 6 bis 9 bei einem Analysengerät für leichte Gase.

## Claims

1. A process for the production of a gas passage (1) with a selectively acting penetration surface for analytical instruments, preferably for test gas detectors for leak detectors, with a gas-selective membrane (7, 8) forming the penetration surface, which membrane
- is substantially permeable to helium and hydrogen and the isotopes thereof and is substantially impermeable to heavier gases,
- consists of a silicon material, such as quartz, quartz glass, Pyrex glass, silicon oxide, silicon nitride, silicon oxynitride, silicon carbide,
- is supported on a disk (4) provided with a plurality of openings and
- is equipped with heating means (10),
**characterised in that**
- the layer (7, 8) of the silicon material possessing the desired selectivity properties is applied onto one side of a silicon disk (4),
- the geometry of a plurality of window openings (5) is defined on the other side of the silicon disk (4),
- said other side of the silicon disk (4) is treated by etching in such a manner that a plurality of openings is formed only in the silicon disk (4), said openings, together with the layer (7, 8) of the gas-selective silicon material, forming the desired plurality of window openings (5) and
- each of the windows (5) is provided with a heating coil (10), which is deposited by means of a thin-film engineering method, in particular by a vacuum coating method or by photolithography.

2. A process according to claim 1, **characterised in that** the window openings (5) are defined in such a manner that the silicon disk (4) is provided on the opposite side thereof from the membrane (7, 8) of the gas-selective silicon material with a passivation and a photoresist layer (6), that the photoresist layer (6) is exposed using a mask, which has the shape of the window openings (5), that the exposed areas of photoresist are removed and that in the areas free of photoresist first the passivation and then the silicon are removed so that only the layer (7, 8) consisting of the gas-selective silicon material remains and forms the desired penetration surface consisting of many windows (5).

3. A process according to claim 1, **characterised in that** the silicon disk (4) is bonded in vacuum-tight manner with a layer (8) of the gas-selective silicon material, said material is made thinner by a mechanical or chemical processing step and the window openings (5) are defined and etched from the reverse side by thin-film engineering methods.

4. A process according to claim 3, **characterised in that** the layer (8) forming the window is anodically bonded by a vacuum-tight joint with the silicon disk (4) and the mechanical or chemical processing to produce the membrane (8) is then performed.

5. A process according to one of claims 1 to 4, **characterised in that** the penetration openings in the silicon disk (4) are produced by an etching process, in particular by anisotropic etching of silicon in KOH.

6. A gas passage (1) with a selectively acting penetration surface for analytical instruments, preferably for test gas detectors for leak detectors, with a gas-selective membrane (7, 8) forming the penetration surface, which membrane
- is substantially permeable to helium and hydrogen and the isotopes thereof and is substantially impermeable to heavier gases,
- consists of a silicon material, such as quartz, quartz glass, Pyrex glass, silicon oxide, silicon nitride, silicon oxynitride, silicon carbide,
- is supported on a disk (4) provided with a plurality of openings and
- is equipped with heating means (10),
**characterised in that**
- the supporting disk (4) takes the form of a silicon disk (4) with a plurality of openings,
- each of the openings in the silicon disk forms, together with the gas-selective membrane (7, 8), window openings (5) and
- each of the windows (5) is provided with a heating coil (10), which is deposited by means of a thin-film engineering method, in particular by a vacuum coating method or by photolithography.

7. A gas passage according to claim 6, **characterised in that** an array of windows is provided to form the total penetration surface, for example 200 square windows (5) having a side length of 0.7 mm to form a total penetration surface of about 1 cm².

8. A gas passage according to claim 6 or 7, **characterised in that** the membranes (7, 8) forming the windows are obtained from a coating or growth process.

9. A gas passage according to claim 8, **characterised in that** the material obtained from a coating or growth process consists of silicon oxide, silicon nitride, silicon oxynitride, silicon carbide, Pyrex glass or another hard glass.

10. Use of a gas passage (1) with the features of one of claims 6 to 9 in a test gas detector with a light gas, preferably helium, as the test gas.

11. Use of a gas passage (1) with the features of one of claims 6 to 9 in an analytical instrument for light gases.

## Revendications

1. Procédé de réalisation d'un passage de gaz (1) présentant une surface de passage à action sélective pour des appareils d'analyse, de préférence pour des détecteurs à gaz témoins de détecteurs de fuite, comprenant une membrane (7, 8) sélective de gaz formant la surface de passage,
- qui est pour l'essentiel perméable à l'hélium et à l'hydrogène ainsi qu'aux isotopes de ceux-ci, et pour l'essentiel imperméable aux gaz lourds,
- qui est réalisée en un matériau de silicium tel que le quartz, le verre de quartz, le verre de pyrex, l'oxyde de silicium, le nitrure de silicium, l'oxynitrure de silicium, le carbure de silicium,
- qui prend appui sur un disque (4) muni d'une pluralité d'ouvertures, et
- qui est équipée de moyens de chauffage (10),
**caractérisé en ce**
- **que** la couche (7, 8) en matériau de silicium présentant les propriétés de sélectivité souhaitées est appliquée sur une face d'un disque en silicium (4),
- **que** la géométrie d'une pluralité d'ouvertures en forme de fenêtre (5) est définie sur l'autre face du disque en silicium (4),
- **que** cette autre face du disque en silicium (4) est traitée par décapage si bien que c'est seulement dans le disque en silicium (4) qu'une pluralité d'ouvertures est réalisée, laquelle forme, conjointement avec la couche (7, 8) en matériau de silicium sélectif de gaz, la pluralité d'ouvertures en forme de fenêtre (5), et
- **que** chacune des fenêtres (5) est munie d'un filament de chauffage (10) qui est appliqué par un procédé technique à couche mince, notamment par un procédé d'enduction sous vide ou par photolithographie.

2. Procédé selon la revendication 1, **caractérisé en ce que** la définition des ouvertures en forme de fenêtre (5) est effectuée de telle sorte que le disque en silicium (4), sur sa face située à l'opposé de la membrane (7, 8) en matériau de silicium sélectif de gaz, est muni d'une couche de passivation et de laque photosensible (6), **en ce que** la couche de laque photosensible (6) est éclairée au moyen d'un masque présentant la forme des ouvertures en forme de fenêtre (5), **en ce que** les zones de laque photosensible éclairées sont enlevées, et **en ce que** dans les zones libérées de la laque photosensible on supprime d'abord la passivation puis le silicium, de manière à ce qu'il ne reste plus que la couche (7, 8) en matériau de silicium sélectif de gaz qui forme la surface de passage souhaitée constituée d'un grand nombre de fenêtres (5).

3. Procédé selon la revendication 1, **caractérisé en ce que** le disque en silicium (4) est relié de manière étanche au vide à une couche (8) en matériau de silicium sélectif de gaz, ce matériau est aminci par une étape de traitement mécanique ou chimique et que les ouvertures en forme de fenêtre (5) sont définies et décapées depuis la face arrière par des procédés techniques à couche mince.

4. Procédé selon la revendication 3, **caractérisé en ce que** la couche (8) formant des fenêtres est mise en contact anodique avec le disque en silicium (4) par une liaison étanche au vide et que le traitement mécanique ou chimique est réalisé ensuite pour obtenir la membrane (8).

5. Procédé selon l'une quelconque des revendications 1 à 4, **caractérisé en ce que** la réalisation des ouvertures de passage dans le disque en silicium (4) est effectuée par un procédé de décapage, notamment par un décapage anisotrope de silicium dans du KOH.

6. Passage de gaz (1) avec une surface de passage à action sélective pour des appareils d'analyse, de préférence pour des détecteurs à gaz témoins de détecteurs de fuite, comprenant une membrane (7, 8) sélective de gaz formant la surface de passage,
- qui est pour l'essentiel perméable à l'hélium et à l'hydrogène ainsi qu'aux isotopes de ceux-ci, et pour l'essentiel imperméable aux gaz lourds,
- qui est réalisée en un matériau de silicium tel que le quartz, le verre de quartz, le verre de pyrex, l'oxyde de silicium, le nitrure de silicium, l'oxynitrure de silicium, le carbure de silicium,
- qui prend appui sur un disque (4) muni d'une pluralité d'ouvertures, et
- qui est équipée de moyens de chauffage (10),
**caractérisé en ce**
- **que** le disque d'appui (4) est un disque en silicium (4) avec une pluralité d'ouvertures,
- **que** chacune des ouvertures du disque en silicium forme, conjointement avec la membrane (7, 8) sélective de gaz, des ouvertures en forme de fenêtre (5), et
- **que** chacune des fenêtres (5) est munie d'un filament de chauffage (10) qui est appliqué par un procédé technique à couche mince, notamment par un procédé d'enduction sous vide ou par photolithographie.

7. Passage de gaz selon la revendication 6, **caractérisé en ce qu'**un tableau de fenêtres est prévu pour former la surface de passage totale, par exemple 200 fenêtres (5) carrées d'une longueur de bord de 0,7 mm pour former une surface de passage de 1 cm² environ.

8. Passage de gaz selon la revendication 6 ou 7, **caractérisé en ce que** les membranes (7, 8) formant des fenêtres résultent d'un procédé d'enrobage ou de revêtement par couche.

9. Passage de gaz selon la revendication 8, **caractérisé en ce que** le matériau résultant d'un procédé d'enrobage ou de revêtement par couche est en oxyde de silicium, en nitrure de silicium, en oxynitrure de silicium, en carbure de silicium, en verre de pyrex ou en un autre verre dur.

10. Utilisation d'un passage de gaz (1) présentant les caractéristiques de l'une quelconque des revendications 6 à 9 sur un détecteur de gaz témoins avec un gaz léger, de préférence de l'hélium, comme gaz témoin.

11. Utilisation d'un passage de gaz (1) présentant les caractéristiques de l'une quelconque des revendications 6 à 9 sur un appareil d'analyse pour gaz légers.
